# EUROPÄISCHE PATENTANMELDUNG

(11) **EP 2 594 858 A1**
(43) Veröffentlichungstag der Anmeldung: **22.05.2013**
(21) Anmeldenummer: 11189090.1
(22) Anmeldetag: 15.11.2011
(51) Int. Cl.: F24F 11/00, H02J 3/14, H02J 13/00

(54) **Verfahren und System zum ferngesteuerten Ansteuern von dezentralen Einzelklimageräten ohne Vernetzungsschnittstelle**

(71) Anmelder: Siemens Aktiengesellschaft, 80333 München (DE)
(72) Erfinder: Apel, Rolf, 90461 Nürnberg (DE); Jung, Manfred, 75045 Joehlingen (DE); Schmitt, Peter, 76351 Linkenheim (DE)

(57) **Zusammenfassung**

Die Erfindung betrifft ein Verfahren zum Ansteuern von Klimageräten (12) und ein nach dem Verfahren arbeitendes System, wobei ein jeweiliges Klimagerät (12) mittelbar oder unmittelbar drahtlos mit einer lokalen Bedieneinheit (28) kommunikativ verbunden ist, wobei die lokale Bedieneinheit (28) über gebäudeinterne Kommunikationswege (30) mit einer Steuereinheit (20) kommunikativ verbunden ist, wobei die Steuereinheit (20) mittelbar oder unmittelbar einen Abschaltbefehl (36) von einem entfernten Energiemanagementsystem (38) erhält und wobei die Steuereinheit (20) einen vom Energiemanagementsystem (38) erhaltenen Abschaltbefehl (36) in Form eines Steuerbefehls (32) an die lokale Bedieneinheit (28) übermittelt und diese das oder jedes Klimagerät (12) deaktiviert.

## Beschreibung

Die Erfindung betrifft ein Verfahren zum ferngesteuerten Ansteuern von dezentralen Einzelklimageräten ohne Vernetzungsschnittstelle sowie ein System zum ferngesteuerten Ansteuern solcher Klimageräte, das nach dem Verfahren arbeitet. Einzelklimageräte der hier betroffenen Art - im Folgenden mitunter kurz auch nur als Klimageräte bezeichnet - sind in einem Gebäude oder einer Gebäudeeinheit, also zum Beispiel einer Wohnung, einem Büro, einem Stockwerk, usw. installiert, also entfernt von einem Energieversorger, der die zum Betrieb des Klimageräts und eventueller weiterer Klimageräte in der gleichen Gebäudeeinheit oder in anderen Gebäudeeinheiten und anderen Gebäuden benötigte elektrische Energie bereit stellt. Als Einzelklimageräte weisen sie keine Vernetzungsschnittstelle oder dergleichen auf. Einzig ein als Fernsteuerung fungierendes Bediengerät ist vorgesehen, das den Verwender eines solchen Klimageräts davon entlastet, Einstellungen, etwa Änderungen eines Temperatursollwerts, am Gerät selbst vornehmen zu müssen.

Eine immer stärkere Verbreitung von Klimageräten oder sonstigen Kühlgeräten oder Heizgeräten, die im Folgenden zusammenfassend als Klimageräte bezeichnet sind, führt zu einem stetig steigenden Bedarf an elektrischer Energie. Im mittleren Osten ist zum Beispiel bis zu siebzig Prozent des Verbrauchs elektrischer Energie auf den Betrieb von Klimageräten zurückzuführen. Dem wurde mit dem Ausbau der Energieversorgung, also der Einrichtung zusätzlicher Kraftwerke, begegnet. Unabhängig davon sind Bestrebungen im Gange, ein intelligentes Stromnetz, das in der Fachterminologie auch als Smart Grid bezeichnet wird, zu schaffen, das auf einer kommunikativen Vernetzung von Energieversorgungsunternehmen einerseits und den Verbrauchsstellen andererseits, also entweder direkt den Energie verbrauchenden Geräten oder den jeweiligen Stromkunden, basiert. So existieren in den USA bereits Modelle, bei denen sich Endkunden bereit erklären, ihre Klimageräte oder auch andere Verbraucher für eine gewisse Zeit abschalten zu lassen, wenn dies durch einen Anruf oder durch sonstige Signale des Energieversorgungsunternehmens veranlasst wird.

Die Erfindung besteht darin, ein einfaches Verfahren und ein nach dem Verfahren arbeitendes System zum ferngesteuerten Ansteuern von Einzelklimageräten ohne Vernetzungsschnittstelle, nämlich zum Herunterschalten oder Deaktivieren solcher Klimageräte aufgrund eines zentralen Abschaltbefehls anzugeben, das für den Betreiber des Klimageräts keine oder nur minimale Installationsmaßnahmen erfordert.

Diese Aufgabe wird hinsichtlich der Verfahrens erfindungsgemäß mit den Merkmalen des Anspruchs 1 gelöst. Dazu ist bei einem Verfahren zum ferngesteuerten Ansteuern von dezentralen Einzelklimageräten ohne Vernetzungsschnittstelle in einem Gebäude oder einer Gebäudeeinheit, wobei ein jeweiliges Einzelklimagerät mittelbar oder unmittelbar drahtlos mit einem lokalen, manuellen Bedienteil verbunden ist, vorgesehen, dass das ferngesteuerte Ansteuern mittels einer zusätzlichen oder das Bedienteil ersetzenden automatischen Bedieneinheit mit identischer drahtloser Schnittstelle zum Einzelklimagerät erfolgt, dass die automatische Bedieneinheit über gebäudeeinheitsinterne Kommunikationswege mit einer im Gebäude oder in der Gebäudeeinheit befindlichen Steuereinheit kommunikativ verbunden ist, dass die Steuereinheit mittelbar oder unmittelbar einen Abschaltbefehl von einem entfernten Energiemanagementsystem erhält und dass die Steuereinheit einen von dem Energiemanagementsystem erhaltenen Abschaltbefehl in Form eines Steuerbefehls an die automatische Bedieneinheit übermittelt und diese mittelbar oder unmittelbar, insbesondere in Form eines Infrarotsignals, ein Steuersignal zum Herunterschalten oder Deaktivieren des jeweiligen Einzelklimageräts an das oder jedes Einzelklimagerät sendet.

Die weitere Beschreibung wird am Beispiel einer Deaktivierung solcher Einzelklimageräte (Klimagerät) fortgesetzt.

Selbstverständlich kann mit dem Steuerbefehl sowohl eine Reduktion des elektrischen Energieverbrauchs, also ein Herunterschalten, wie auch ein Deaktivieren des Klimageräts, also eine Reduktion des elektrischen Energieverbrauchs auf Null oder nahe Null, bewirkt werden. Deshalb soll, wenn hier und im Folgenden Begriffe wie "deaktivieren", "Deaktivierung" und dergleichen auch in Alleinstellung verwendet werden, angenommen werden, dass jeweils "deaktivieren oder herunterschalten", also jede Art der energieverbrauchsverringernden Beeinflussung des Klimageräts, gemeint ist.

Der Vorteil der Erfindung besteht darin, dass auf Seiten des Betreibers eines oder mehrerer Einzelklimageräte in seinem Gebäude oder in seiner Gebäudeeinheit lediglich eine lokale Bedieneinheit und eine ebenfalls lokale, also in dem Gebäude oder in der Gebäudeeinheit befindliche, Steuereinheit zusätzlich erforderlich sind, wobei letztere geeignet ist, von dem entfernten Energiemanagementsystem, also z.B. einer diesbezüglichen Funktionalität des Energieversorgers, einen Abschaltbefehl zu empfangen und aufgrund des Abschaltbefehls einen Steuerbefehl zu generieren und diesen an die lokale Bedieneinheit zu übermitteln. Die Bedieneinheit weist eine im Vergleich zum Bedienteil des Einzelklimageräts identische drahtlose Schnittstelle zum Einzelklimagerät auf, also zum Beispiel eine Infrarotdiode zum Aussenden von Steuersignalen in Form eines Infrarotsignals. Eine Vernetzungsschnittstelle am Einzelklimagerät wird demnach nicht benötigt und die Bedieneinheit kann das Bedienteil ersetzen oder neben dem Bedienteil verwendet werden. Die Bedieneinheit ist aber - anders als das nur zur Bedienung des Einzelklimageräts vorgesehene Bedienteil - dafür ausgelegt, Steuerbefehle von der Steuereinheit zu erhalten und aufgrund eines solchen Steuerbefehls Steuersignale an das Einzelklimagerät zu senden. Die Bedieneinheit fungiert damit als Vernetzungsschnittstelle und ermöglicht den Empfang von auf externe Abschaltbefehle zurückgehenden Steuerbefehlen.

Bereits für die Übermittlung des Steuerbefehls an die Bedieneinheit werden gebäudeinterne Kommunikationswege verwendet, also zum Beispiel eine bereits vorhandene Elektroinstallation. Alternativ kommt auch eine elektromagnetische Übermittlung des Steuerbefehls, also zum Beispiel eine Übermittlung des Steuerbefehls in Form von Funk- oder Infrarotsignalen in Betracht. Auch für die mittelbare oder unmittelbare Übermittlung eines Steuersignals an das Einzelklimagerät wird keine spezielle Installation benötigt. Für die Bedieneinheit ist lediglich erforderlich, dass diese einerseits zum Erhalt eines Steuerbefehls und andererseits zur Abgabe eines drahtlos, insbesondere in Form eines Infrarotsignals, übermittelbaren Steuersignals geeignet ist. Eine mittelbare drahtlose kommunikative Verbindung zwischen der lokalen Bedieneinheit und dem Klimagerät bezieht sich zum Beispiel auf eine Klimagerätesteuerung oder einen Thermostat des Klimageräts. Mit diesem kann ausgehend von der lokalen Bedieneinheit die unmittelbare kommunikative Verbindung bestehen. Indem die Klimagerätesteuerung oder das Thermostat das Klimagerät beeinflusst, ist die lokale Bedieneinheit bei einer unmittelbaren kommunikativen Verbindung nur mit der Klimagerätesteuerung bzw. dem Thermostat zumindest mittelbar auch mit dem Klimagerät kommunikativ verbunden.

Der mittelbare oder unmittelbare Erhalt eines Abschaltbefehls von dem entfernten Energiemanagementsystem bezieht sich für die Steuereinheit auf unterschiedliche Installationsarten. Entweder ist die Steuereinheit selbst geeignet zum Empfang eines eventuellen Abschaltbefehls angeschlossen, dann erhält diese den Abschaltbefehl unmittelbar. Eventuell ist aber auch nur eine Einrichtung zur quantitativen Erfassung des Energiebezugs, also ein Stromzähler oder dergleichen, insbesondere in einer Ausführungsform als intelligenter Stromzähler, zum Empfang eines eventuellen Abschaltbefehls geeignet angeschlossen. Dann erhält die Steuereinheit den Abschaltbefehl zumindest mittelbar, indem sie nämlich mit dem Stromzähler geeignet kommunikativ verbunden ist.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn die Steuereinheit von einem in dem jeweiligen Gebäude oder der jeweiligen Gebäudeeinheit befindlichen, also lokalen intelligenten Zähler, einem sogenannten Smart Meter, umfasst oder mit diesem kommunikativ verbunden ist, erfolgt die Installation der Steuereinheit an einer definierten Position im Gebäude oder in der Gebäudeeinheit, an der auch andere Einrichtungen im Zusammenhang mit dem Energiebezug installiert sind. Die Steuereinheit kann dabei in den intelligenten Zähler integriert, also von diesem umfasst sein, zum Beispiel nach Art eines zusätzlichen Funktionsmoduls. Die Steuereinheit kann auch als separate Funktionseinheit installiert sein und ist dann mit dem intelligenten Zähler in geeigneter Art und Weise kommunikativ verbunden, zum Beispiel mit einem Datenkabel. Unabhängig von der Installationsart ist gewährleistet, dass der intelligente Zähler, der mit dem jeweiligen Energieversorger und dortigen Steuerungseinrichtungen, also einem entfernten Energiemanagementsystem, verbunden ist, für die Steuereinheit Informationen über einen etwaigen Abschaltbefehl von dem entfernten Energiemanagementsystem erhalten kann.

Bei einer besonderen Ausführungsform ist vorgesehen, dass die Steuereinheit den Abschaltbefehl über eine Zuleitung zur Zuführung elektrischer Energie an eine das Klimagerät umfassende Gebäudeeinheit erhält. Die Zuleitung ist dafür an die Steuereinheit oder den intelligenten Zähler, mit dem die Steuereinheit dann zumindest kommunikativ verbunden ist, herangeführt.

Der vom Energiemanagementsystem des Energieversorgers generierte Abschaltbefehl wird dann zum Beispiel nach dem von der sogenannten powerline communication bekannten Prinzip der Zuleitung aufgeprägt. Der Abschaltbefehl kann entweder direkt von der Steuereinheit, wenn die Zuleitung auch an diese herangeführt ist, oder indirekt über den intelligenten Zähler, wenn die Zuleitung nur an diesen herangeführt ist und Zähler und Steuereinheit kommunikativ verbunden sind, detektiert werden. Eine alternative Möglichkeit zur Übermittlung des Abschaltbefehls besteht darin, diesen per Internet zu übermitteln. Dazu sind das Energiemanagementsystem einerseits und die Steuereinheit oder der intelligente Zähler andererseits in geeigneter und an sich bekannter Art und Weise mit dem Internet verbunden.

Bei einer weiteren Ausführungsform des Verfahrens ist vorgesehen, dass als gebäudeinterne Kommunikationswege zur Übermittlung eines Steuerbefehls von der Steuereinheit an die Bedieneinheit vorhandene Stromleitungen oder Funkverbindungen genutzt werden. Bei einer zu deren Energieversorgung an das lokale Netz angeschlossenen Bedieneinheit kommt in Betracht, dass die Stromleitung des lokalen Netzes als gebäudeinterner Kommunikationsweg genutzt wird. Die Steuereinheit prägt demnach zum Deaktivieren des oder jedes Klimageräts der Stromleitung oder den Stromleitungen einen Steuerbefehl nach dem von der sogenannten powerline communication bekannten Prinzip ein, der von der Bedieneinheit erkannt und geeignet interpretiert und umgesetzt wird. Bei zum Beispiel batteriebetriebenen Bedieneinheiten kommt die Verwendung von Funkverbindungen oder Infrarotverbindungen als gebäudeinterne Kommunikationswege in Betracht. In allen Fällen ist keine zusätzliche Installation erforderlich, um den von der Steuereinheit generierten Steuerbefehl an die Bedieneinheit zu übermitteln.

Eine besonders günstige Möglichkeit zum Herunterschalten oder zur Deaktivierung eines Klimageräts besteht darin, dass das Herunterschalten oder Deaktivieren des Klimageräts durch eine Erhöhung eines Temperatursollwerts bewirkt wird. Dies trägt der Tatsache Rechnung, dass Einzelklimageräte normalerweise nur mit einem vergleichsweise einfachen Bedienteil beeinflussbar sind und dass eine minimale Funktionalität solcher Bedienteile darin besteht, dem Klimagerät einen (geänderten) Temperatursollwert vorzugeben. Indem das Herunterschalten oder Deaktivieren des jeweiligen Klimageräts durch eine Erhöhung des Temperatursollwerts bewirkt wird, kann nicht nur die Schnittstellenphysik, also zum Beispiel ein Infrarotempfänger, sondern auch die Verarbeitung der eingehenden Steuersignale auf Seiten des Klimageräts unverändert beibehalten werden. Eine Erhöhung eines Temperatursollwerts, insbesondere auf einen Maximalwert für den Temperatursollwert, hat nämlich den Effekt, dass vom Klimagerät oder von einer Klimagerätesteuerung oder einem Thermostat erkannt wird, dass der neue Temperatursollwert nahe bei oder über einem aktuellen Temperaturistwert liegt. Wenn der neue Temperatursollwert nahe bei einem aktuellen Temperaturistwert liegt, ist unmittelbar nur noch eine verringerte Kühl- oder Heizleistung des Klimagerätes erforderlich, so dass dessen Energieverbrauch zurückgeht. Wenn bei einem als Kühlgerät fungierenden Klimagerät der neue Temperatursollwert über dem aktuellen Temperaturistwert liegt, ist keine weitere Kühlleistung des Klimagerätes erforderlich und die interne Regelung führt dazu, dass das Klimagerät deaktiviert wird, bis entweder der Temperaturistwert über den neuen Temperatursollwert steigt oder bis ein neuer, reduzierter Temperatursollwert vorgegeben wird. Bei einem als Heizgerät fungierenden Klimagerät gilt das Vorstehende analog.

Die oben genannte Aufgabe wird auch mit einem System zum ferngesteuerten Ansteuern von dezentralen Einzelklimageräten ohne Vernetzungsschnittstelle mit einer in einem Gebäude oder einer Gebäudeeinheit befindlichen Steuereinheit sowie in einem gleichen Gebäude oder einer gleichen Gebäudeeinheit zumindest einer lokalen Bedieneinheit für zumindest ein Einzelklimagerät dadurch gelöst, dass die Steuereinheit von einem entfernten Energiemanagementsystem ansteuerbar ist, dass die oder jede lokale Bedieneinheit jeweils mit zumindest einem Klimagerät mittelbar oder unmittelbar kommunikativ verbindbar ist, dass die Steuereinheit im Betrieb des Systems vom Energiemanagementsystem einen Abschaltbefehl erhält und auf dessen Basis über gebäudeinterne oder gebäudeeinheitsinterne Kommunikationswege an zumindest eine Bedieneinheit Steuerbefehle weiterleitet und dass daraufhin die oder jede Bedieneinheit zumindest ein Klimagerät herunterschaltet oder deaktiviert.

Das System arbeitet dabei nach dem Verfahren wie hier und nachfolgend beschrieben. Zur Verwendung in dem System ist die jeweilige Steuereinheit mit Mitteln zum Empfangen von Abschaltbefehlen von einem entfernten Energiemanagementsystem und Mitteln zum Generieren von Steuerbefehlen anhand eines vom Energiemanagementsystem empfangenen Abschaltbefehls und zum Weiterleiten solcher Steuerbefehle an zumindest eine Bedieneinheit versehen. Als Mittel zum Empfangen von Abschaltbefehlen kommt insbesondere ein Demodulator in Betracht, mit dem ein einer Zuleitung zur elektrischen Energieversorgung des Gebäudes oder der Gebäudeeinheit nach dem Prinzip der powerline communication eingeprägter Abschaltbefehl in ein von der Steuereinheit verarbeitbares Signal umgesetzt werden kann. Das auf den empfangenen Abschaltbefehl zurückgehende Signal wird dann von der Steuereinheit interpretiert. Auf diese Weise können zum Beispiel eine Vielzahl von Befehlen, die vom Energiemanagementsystem bei der Steuereinheit eingehen können, unterschieden werden. Wenn der dem jeweils generierten Signal zugrunde liegende Befehl als Abschaltbefehl erkannt wurde, generiert die Steuereinheit mit entsprechenden Mitteln einen diesbezüglichen Steuerbefehl zur Weiterleitung an die Bedieneinheit oder an mehrere Bedieneinheiten oder eine vorgegebene oder vorgebbare Gruppe von Bedieneinheiten. Als Mittel zum Generieren und Weiterleiten eines solchen Steuerbefehls für die Bedieneinheit (en) kommt insbesondere ein Modulator in Betracht, mit dem einer Stromleitung als Beispiel für einen bestehenden gebäudeinternen Kommunikationsweg nach dem Prinzip der powerline communication der Steuerbefehl einprägbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein System zum Ansteuern von Klimageräten mit einer gebäudeseitigen Steuereinheit sowie einer gebäudeseitigen Bedieneinheit und
- FIG 2: sowie
- FIG 3: die Steuereinheit bzw. die Bedieneinheit mit weiteren Details.

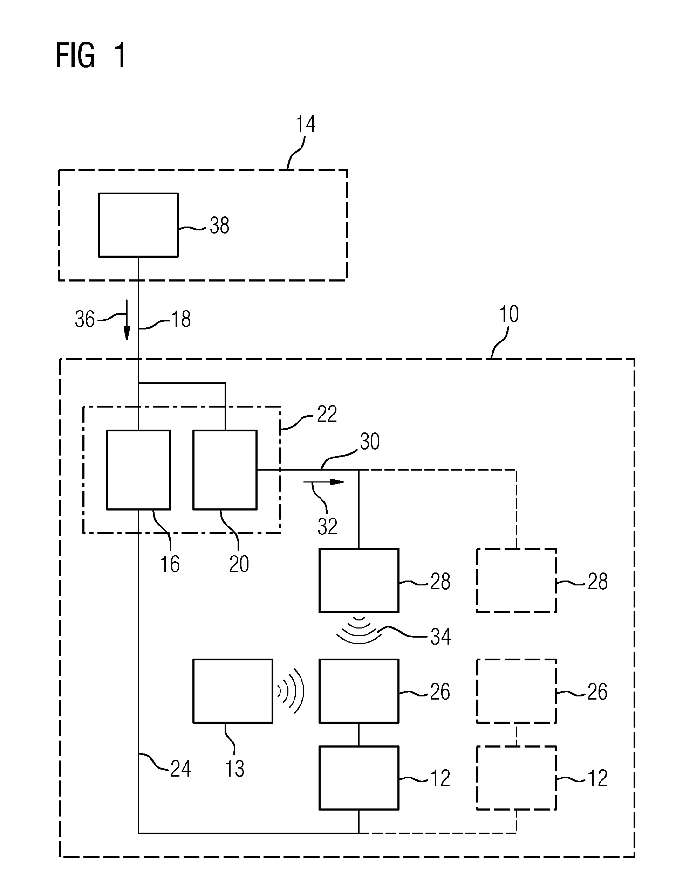

FIG 1 zeigt schematisch stark vereinfacht ein Gebäude oder eine Gebäudeeinheit 10, also zum Beispiel eine Wohnung, ein Büro, ein Stockwerk und so weiter, in dem sich zumindest ein im Folgenden mitunter kurz auch nur als Klimagerät 12 bezeichnetes Einzelklimagerät 12 befindet. Das Gebäude oder die Gebäudeeinheit 10 werden im Folgenden zusammenfassend, aber ohne Verzicht auf eine eventuell weitergehende Allgemeingültigkeit, als Gebäudeeinheit 10 bezeichnet.

Das Klimagerät 12 wird als Einzelklimagerät 12 bezeichnet, weil es keine Vernetzungsschnittstelle aufweist. Einzig ein Infrarotempfänger oder dergleichen zur drahtlosen Bedienung mit einem als lokale Fernsteuerung fungierenden Bedienteil 13 ist vorgesehen.

Zur elektrischen Energieversorgung erhält das oder jedes Einzelklimagerät 12 elektrischen Strom von einem Energieversorger 14. Der Energiebezug erfolgt in an sich bekannter Art und Weise über eine an die Gebäudeeinheit 10 und dort einen in der Fachterminologie als Smart Meter bezeichneten intelligenten Zähler 16 herangeführte Zuleitung 18. Von dem intelligenten Zähler 16 umfasst oder mit diesem kommunikativ verbunden ist in der Gebäudeeinheit 10 eine Steuereinheit 20 vorgesehen, die im Folgenden mit weiteren Details beschrieben wird. Der intelligente Zähler 16 und die Steuereinheit 20 können zu einem Gerät 22 zusammengefasst sein, etwa indem die Funktionalität der Steuereinheit 20 in die Funktionalität des intelligenten Zählers 16 integriert ist oder indem der intelligente Zähler 16 die Steuereinheit 20 als modulare Funktionseinheit umfasst.

Der intelligente Zähler 16 dient zur quantitativen Erfassung des Energiebezugs und entsprechend ist bei der Darstellung in FIG 1 eine zur Stromversorgung an das mindestens eine Klimagerät 12 herangeführte elektrische Leitung 24 als Fortsetzung der Zuleitung 18 gezeigt.

Zur Steuerung und/oder Regelung des Klimageräts 12 ist jeweils eine Klimagerätesteuerung in Form von oder nach Art eines Thermostats 26 vorgesehen und jede Klimagerätesteuerung/jeder Thermostat 26 ist mit dem Bedienteil 13 auf leitungslosem Wege ansteuerbar. Die Ansteuerung des Thermostats 26 durch das Bedienteil 13 umfasst dabei zumindest die Vorgabe eines Temperatursollwerts für das Klimagerät 12, wobei eine Vorgabe eines vergleichsweise hohen Temperatursollwerts einer Deaktivierung des Klimageräts 12 gleichkommt und hier und im Folgenden auch als Deaktivierung des Klimageräts 12 bezeichnet wird.

Der hier vorgeschlagene Ansatz zum ferngesteuerten Ansteuern von dezentralen Einzelklimageräten 12 oder zur ferngesteuerten Ansteuerung eines Einzelklimageräts 12 basiert nun darauf, dass ein solches Klimagerät 12 unmittelbar oder mittelbar, nämlich zum Beispiel über den jeweiligen Thermostat 26, mit einer zusätzlich oder alternativ zum Bedienteil 13 vorgesehenen lokalen Bedieneinheit 28 verbunden ist und dass die lokale Bedieneinheit 28 über gebäudeinterne Kommunikationswege 30 mit der im selben Gebäude oder in der selben Gebäudeeinheit 10 befindlichen Steuereinheit 20 kommunikativ verbunden ist. Eine Übertragung von Steuerbefehlen 32 und Steuersignalen 34 von der Steuereinheit 20 an ein Klimagerät 12 ist also ohne Eingriff in eine bestehende Installation in der Gebäudeeinheit 10 möglich. Für die Übermittlung eines Steuerbefehls 32 von der Steuereinheit 20 an die Bedieneinheit 28 kommt eine leitungslose oder leitungsgebundene Übermittlung in Betracht. Bei einer leitungslosen Übermittlung kommt zum Beispiel eine Übermittlung mit einem lokalen Funknetz (WLAN) in Betracht. Bei einer leitungsgebundenen Übermittlung kommt in Betracht, eine bestehende Elektroinstallation zu verwenden und den Stromleitungen mit einer bestimmten Trägerfrequenz ein Nutzdatensignal aufzuprägen, das den Steuerbefehl 32 in kodierter Form umfasst. Dieses Prinzip der Datenübertragung ist an sich bekannt und wird in der Fachterminologie als powerline communication, kurz PLC, bezeichnet. Für die Übermittlung von Steuersignalen 34 von der Bedieneinheit 28 an den Thermostat 26 kommt eine Übermittlung auf Funkbasis oder auf Infrarotbasis in Betracht, je nachdem welche Form von Schnittstelle bereits beim Thermostat 26 oder beim Klimagerät 12 vorhanden ist.

Die von der Steuereinheit 20 generierten Steuerbefehle 32 erzeugt dieses auf Basis eines eventuellen Abschaltbefehls 36, den ein entferntes Energiemanagementsystem 38, das zum Beispiel vom Energieversorger 14 betrieben wird, in Ansehung der jeweiligen Lastsituation des Energieversorgungsnetzes generiert. Der vom Energiemanagementsystem 38 generierte Abschaltbefehl 36 soll demnach bei Lastspitzen eine Möglichkeit eröffnen, elektrische Verbraucher zu deaktivieren, um so Engpässe bei der elektrischen Energieversorgung zu vermeiden oder gar Ausfälle der Energieversorgung zu verhindern.

Wenn also durch das Energiemanagementsystem 38 in dieser Hinsicht eine Ausnahmesituation oder eine Gefahr für eine Ausnahmesituation erkannt wird, erzeugt dieses einen Abschaltbefehl 36, um einzelne Energieverbraucher, also zum Beispiel Klimageräte 12, zu deaktivieren. Klimageräte 12 kommen zur Deaktivierung im Falle aktueller oder bevorstehender, kurzzeitiger Energieengpässe besonders in Betracht, weil sie zum Einen vergleichsweise große Mengen elektrischer Energie benötigen und weil zum Anderen durch eine kurzzeitige Deaktivierung von einigen Minuten bis ca. zu einem Zeitraum von einer Stunde mit der Deaktivierung eines Klimageräts 12 für dessen Benutzer kaum Komforteinbußen verbunden sind, weil die Raumluft und die Gebäudemasse bereits gekühlt oder erwärmt sind und sich damit ein gewisser Puffereffekt ergibt.

Ein vom Energiemanagementsystem 38 ausgesandter Abschaltbefehl 36 wird bei einer Mehrzahl von Verbrauchsstellen jeweils durch die dortige Steuereinheit 20 verarbeitet. Die Übermittlung des Abschaltbefehls 36 kann zum Beispiel erfolgen, indem dieser mit einer festgelegten Trägerfrequenz der Zuleitung 18 aufgeprägt wird. Der Abschaltbefehl 36 gelangt damit ohne weiteres Zutun an eine Vielzahl von Verbrauchsstellen.

Die Steuereinheit 20 weist Mittel zur Detektion eines eventuellen Abschaltbefehls 36 sowie Mittel zur Generierung eines Steuerbefehls 32 in Abhängigkeit von einem detektierten Abschaltbefehl 36 auf. Indem die Steuereinheit 20 den gegebenenfalls generierten Steuerbefehl 32 über gebäudeinterne Kommunikationswege 30 an zumindest eine Bedieneinheit 28 übermittelt, kann der ursprüngliche Abschaltbefehl 36 ohne Eingriff in die bestehende Elektroinstallation in der Gebäudeeinheit 10 an die Bedieneinheit 28 übertragen werden. Die lokale Bedieneinheit 28 tritt ihrerseits als Fernbedienung, insbesondere als Funkfernbedienung oder als Infrarot-Fernbedienung, mit dem Klimagerät 12 oder einem dem Klimagerät 12 vorgeschalteten Thermostat 26 normalerweise ebenfalls auf leitungslosem Weg in Kontakt, so dass zur Weiterleitung des ursprünglichen Abschaltbefehls 36 an das Klimagerät 12 oder den Thermostat 26 in Form eines Steuersignals 34 ebenfalls keine zusätzliche Installation von Kommunikationspfaden erforderlich ist.

Die mit dem Abschaltbefehl 36 beabsichtigte Deaktivierung einzelner elektrischer Verbraucher erfolgt im Falle eines oder mehrerer als Kühlgerät(e) fungierender Klimageräte 12, indem an das Klimagerät 12 oder den Thermostat 26 aufgrund des ursprünglichen Abschaltbefehls 36 ein Steuersignal 34 übermittelt wird, mit dem ein Temperatursollwert für das Klimagerät 12 oder dessen Thermostat 26 hochgesetzt wird. Der von der Steuereinheit 20 generierte Steuerbefehl 32 und das daraufhin von der Bedieneinheit 28 abgegebene Steuersignal 34 kann den geänderten Temperatursollwert in kodierter Form umfassen. Genauso ist möglich, dass als Steuerbefehl 32 und Steuersignal 34 jeweils ein Kennung übertragen wird, die bei deren Empfang durch das Klimagerät 12 oder den Thermostat 26 zu einer Heraufsetzung des Temperatursollwerts auf einen vorgegebenen oder vorgebbaren Wert führt, insbesondere einen Maximalwert des Temperatursollwerts. Weiterhin ist möglich, dass nur der Steuerbefehl 32 eine Kennung umfasst, die von der Bedieneinheit 28 geeignet interpretiert wird und den die Bedieneinheit 28 aufgrund einer solchen Interpretation in ein Steuersignal 34 umsetzt, mit dem auf Seiten des Klimageräts 12 oder des Thermostats 26 eine Heraufsetzung des Temperatursollwerts auf einen vorgegebenen oder vorgebbaren Wert bewirkt wird, insbesondere einen Maximalwert des Temperatursollwerts.

Die Darstellung in FIG 1 lässt sich damit auch wie folgt beschreiben: Es wird ein dreigeteilter Übertragungsweg gezeigt. In einem ersten Abschnitt erfolgt eine Übertragung des Abschaltbefehls 36 von einer als Energiemanagementsystem 38 oder Lastmanagementzentrale fungierenden zentralen Steuereinheit bis zu einem Endgerät in der Wohnung, dem Büro, usw., nämlich der Steuereinheit 20. In einem zweiten Abschnitt erfolgt die Übertragung eines oder mehrerer Steuerbefehle 32 von der Steuereinheit 20 zu einer als Gateway im Raum (Wohnraum, Büroraum, usw.) fungierenden Bedieneinheit 28. In einem dritten und letzten Abschnitt erfolgt die Übertragung von Steuersignalen 34 von der Bedieneinheit 28 an das Klimagerät 12 und zwar entweder unmittelbar an das Klimagerät 12 oder mittelbar an das Klimagerät 12 über ein Thermostat 26. Die Übertragung im ersten Abschnitt erfolgt über die Zuleitung 18 oder über eine separate Datenleitung, nämlich zum Beispiel als powerline communication bzw. per DSL oder dergleichen. Die Übertragung im zweiten Abschnitt, also innerhalb der Gebäudeeinheit 10, erfolgt über gebäudeinterne Kommunikationswege 30, also zum Beispiel Stromleitungen, als Inhome powerline communication oder über Funk. Die Übertragung der Steuersignale 34 im dritten Abschnitt erfolgt bei der dargestellten Ausführungsform in Form von Infrarotsignalen.

Die Bedieneinheit 28 ist zusätzlich zum oder als Ersatz des Bedienteils 13 erforderlich. Anders als das nur zur Kommunikation mit dem Einzelklimagerät 12 oder dessen Thermostat 26 vorgesehene Bedienteil 13 ist die Bedieneinheit 28 dafür ausgelegt, über gebäudeinterne Kommunikationswege 30 Steuerbefehle 32 zu erhalten. Speziell wenn das Herunterschalten oder Deaktivieren des Klimageräts 12 durch eine Erhöhung eines Temperatursollwerts für das Klimagerät 12 erreicht werden soll, umfasst die Bedieneinheit 28 eine zum Beispiel in Software oder in Form eines ASICs oder dergleichen implementierte Funktionalität, die bei einem auf einen Abschaltbefehl 36 zurückgehenden Steuerbefehl 32 diesen erkennt und eine geeignete Verarbeitung einleitet. Zu der Verarbeitung gehört zum Beispiel, dass ein vorgegebener oder vorgebbarer Temperaturwert aus einem Speicher der Bedieneinheit 28 ausgelesen wird und dass mit diesem Temperaturwert ein vom Thermostat 26 oder vom Klimagerät 12 verarbeitbares Steuersignal 34 generiert wird, das die Erhöhung des Temperatursollwerts bewirkt. Evtl. können auch unterschiedliche Kategorien von Abschaltbefehlen 36 vorgesehen sein, die dann zu unterschiedlichen Kategorien von Steuerbefehlen 32 führen. Je nach Steuerbefehl 32 kann die Bedieneinheit 28 dann aus einem Speicher unterschiedliche Temperaturwerte abrufen und mit diesen Steuersignale 34 zur Erhöhung des Temperatursollwerts generieren. Auf diese Weise ist in Abhängigkeit vom Abschaltbefehl 36 auch eine stufenweise Verringerung des Energieverbrauchs eines als Kühlgerät fungierenden Klimageräts 12 oder einer Gruppe solcher Klimageräten 12 realisierbar. Für ein als Heizgerät fungierendes Klimagerät 12 oder mehrere solcher Geräte gilt das oben Gesagte auch für dessen, bzw. deren Ansteuerung mit einem reduzierten Temperatursollwert entsprechend.

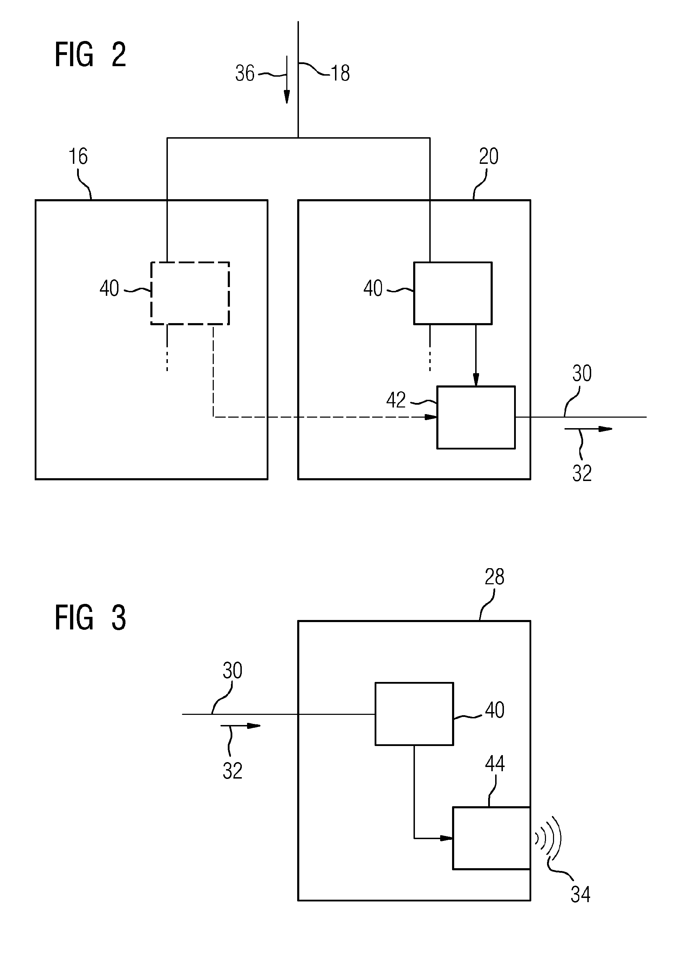

FIG 2 zeigt eine schematisch vereinfachte Darstellung eines Ausschnitts aus FIG 1 mit weiteren Details für die Steuereinheit 20, nämlich einem Demodulator 40 und einem Modulator 42. Bei der Darstellung in FIG 1 und FIG 2 ist vorausgesetzt, dass die Zuleitung 18 nicht nur an den intelligenten Zähler 16, sondern auch an die Steuereinheit 20 herangeführt ist. Wenn die Zuleitung 18 nur an den intelligenten Zähler 16 herangeführt ist und der intelligente Zähler 16 und die Steuereinheit 20 zumindest kommunikativ verbunden sind, umfasst der intelligente Zähler 16 den in FIG 2 für die Steuereinheit 20 dargestellten Demodulator 40. Die grundsätzliche Funktionsweise ändert sich dadurch allerdings nicht.

Mit dem Demodulator 40 werden nach dem von der sogenannten powerline communication bekannten Prinzip Datensignale, die der Zuleitung 18 eingeprägt wurden, also insbesondere ein etwaiger Abschaltbefehl 36, detektiert. Der Demodulator 40 und eine dem Demodulator 40 zugeordnete, nicht separat dargestellte Verarbeitungseinheit in Form von oder nach Art eines Mikroprozessors wandeln die detektierten Signale in für die Steuereinheit 20 verarbeitbare Signale um. Zu diesem Zweck ist die Verarbeitungseinheit vorgesehen, die ein in einem Speicher (nicht dargestellt) vorgehaltenes Computerprogramm ausführt, um einen etwaigen Abschaltbefehl 36 zu erkennen und erforderlichenfalls einen Steuerbefehl 32 zu generieren. Wenn ein Abschaltbefehl 36 erkannt wurde, wird ein Modulator 42 angesteuert, der bei der in FIG 1 gezeigten Situation einer Stromleitung 30 nach dem von der powerline communication bekannten Prinzip einen Steuerbefehl 32 einprägt, der von einer Bedieneinheit 28 (FIG 1) verarbeitet werden kann. In FIG 2 ist zur Verdeutlichung des Wirkpfads bei erkanntem Abschaltbefehl 36 ein Pfeil vom Demodulator 40 zum Modulator 42 eingezeichnet. Tatsächlich umfasst dieser Wirkpfad das Erkennen von eventuell der Zuleitung 18 eingeprägten Nutzdatensignalen durch den Demodulator 40, die Umsetzung von Ausgangssignalen der Demodulation in für die Steuereinheit 20 verarbeitbare Signale, den Vergleich solcher verarbeitbarer Signale mit einer in der Steuereinheit 20 hinterlegten Kennung, die eine vom Demodulator 40 generierte Signalfolge eindeutig als von einem Abschaltbefehl 36 herrührend kennzeichnet, und sodann eine Aktivierung des Modulators 42 zum Generieren des Steuerbefehls 32.

In FIG 3 ist schematisch vereinfacht die Bedieneinheit 28 dargestellt. Wenn die Bedieneinheit 28 Steuerbefehle 32 über eine Stromleitung 30 als Beispiel für einen gebäude- oder gebäudeeinheitsinternen Kommunikationsweg 30 erhält, umfasst die Bedieneinheit 28 zumindest einen Demodulator 40 wie vorstehend für die Steuereinheit 20 erläutert. Wenn die Bedieneinheit 28 Steuerbefehle 32 auf leitungslosem Weg erhält, also zum Beispiel per Funk oder als Infrarotsignal, weist diese einen entsprechenden Empfänger (nicht dargestellt) auf. Bei der Darstellung in FIG 3 ist vorausgesetzt, dass die leitungslose Übermittlung der Steuersignale 34 an das Klimagerät 12 oder dessen Thermostat 26 in Form von Infrarotsignalen erfolgt. Deshalb ist als Sender solcher leitungslosen Steuersignale eine schematisch vereinfachte Darstellung einer Infrarotsendediode 44 gezeigt. Innerhalb der Bedieneinheit 28 ist durch einen Pfeil ein Wirkpfad vom Demodulator 40 zur Infrarotsendediode 44 gezeigt. Der Wirkpfad umfasst das Erkennen von eventuell der Stromleitung 30 eingeprägten Nutzdatensignalen durch den Demodulator 40, eine Umsetzung von Ausgangssignalen der Demodulation in für die Bedieneinheit 28 verarbeitbare Signale, einen Vergleich solcher verarbeitbarer Signale mit zumindest einer in der Bedieneinheit 28 hinterlegten Kennung und sodann eine Aktivierung der Infrarotsendediode 44 zum Generieren des Steuersignals 34. Die soeben beschriebene Funktionalität wird dabei, wie bei der Steuereinheit 20, durch eine Verarbeitungseinheit und ein Computerprogramm oder einen als Verarbeitungseinheit fungierenden ASIC oder dergleichen realisiert. Bei der Steuereinheit 20 und bei der Bedieneinheit 28 fungiert demnach die Verarbeitungseinheit und das Computerprogramm oder ein entsprechender ASIC als Mittel zum Empfangen eines Abschaltbefehls 36 bzw. eines Steuerbefehls 32 und als Mittel zum Generieren eines Steuerbefehls 32 bzw. eines Steuersignals 34.

Einzelne im Vordergrund stehende Aspekte der hier eingereichten Beschreibung lassen sich damit kurz wie folgt zusammenfassen: Durch die zumindest mittelbare Verbindung eines Energiemanagementsystems 38 mit den Endgeräten, nämlich den Klimageräten 12, besteht eine Möglichkeit zum direkten Einwirken auf diese, um sie im Bedarfsfall zum Beispiel deaktivieren zu können. Dadurch lässt sich die Stabilität des elektrischen Verteilnetzes erhöhen. Nachdem weder in den Wohnungen, Geschäften und Büros (Gebäudeeinheiten 10) noch bei den Klimageräten 12 Umbau- oder Installationsmaßnahmen erforderlich sind, ist eine hohe Akzeptanz durch die Nutzer der Klimageräte 12 zu erwarten. Darüber hinaus führt das gezielte Vermeiden von Lastspitzen zu großen Einsparungen oder zumindest zu großem Einsparpotential auf der Erzeuger- und Verteilerseite. Durch teilweise Weitergabe solcher Einsparungen an den Endverbraucher profitiert der Klimagerätenutzer ebenfalls. Bei einer Ausführungsform des Verfahrens und des Systems kann eine Möglichkeit zum manuellen Übersteuern eines von der Steuereinheit 20 generierten Steuerbefehls 32 vorgesehen sein.

### Bezugszeichenliste

- 10: Gebäude/Gebäudeeinheit
- 12: Klimagerät
- 13: Bedienteil
- 14: Energieversorger
- 16: intelligente Zähler (Smart Meter)
- 18: Zuleitung
- 20: lokale Steuereinheit
- 22: Gerät
- 24: elektrische Leitung
- 26: Thermostat/Klimagerätesteuerung
- 28: automatische Bedieneinheit
- 30: gebäudeinterner Kommunikationsweg
- 32: Steuerbefehl
- 34: Steuersignal
- 36: Abschaltbefehl
- 38: zentrale Steuereinheit
- 40: Demodulator
- 42: Modulator
- 44: Infrarotsendediode

## Patentansprüche

1. Verfahren zum ferngesteuerten Ansteuern von dezentralen Einzelklimageräten (12) ohne Vernetzungsschnittstelle in einem Gebäude oder einer Gebäudeeinheit (10),
wobei ein jeweiliges Einzelklimagerät (12) mittelbar oder unmittelbar drahtlos mit einem lokalen, manuellen Bedienteil (13) verbunden ist,
wobei das ferngesteuerte Ansteuern mittels einer zusätzlichen oder das Bedienteil (13) ersetzenden automatischen Bedieneinheit (28) mit identischer drahtloser Schnittstelle zum Einzelklimagerät (12) erfolgt,
wobei die automatische Bedieneinheit (28) über gebäudeeinheitsinterne Kommunikationswege (30) mit einer im Gebäude oder in der Gebäudeeinheit (10) befindlichen Steuereinheit (20) kommunikativ verbunden ist,
wobei die Steuereinheit (20) mittelbar oder unmittelbar einen Abschaltbefehl (36) von einem entfernten Energiemanagementsystem (38) erhält und
wobei die Steuereinheit (20) einen von dem Energiemanagementsystem (38) erhaltenen Abschaltbefehl (36) in Form eines Steuerbefehls (32) an die automatische Bedieneinheit (28) übermittelt und diese mittelbar oder unmittelbar, insbesondere in Form eines Infrarotsignals, ein Steuersignal (34) zum Herunterschalten oder Deaktivieren des jeweiligen Einzelklimageräts (12) an das oder jedes Einzelklimagerät (12) sendet.

2. Verfahren nach Anspruch 1, wobei die Steuereinheit (20) von einem lokalen intelligenten Zähler (16) umfasst oder mit diesem kommunikativ verbunden ist.

3. Verfahren nach Anspruch 1 oder 2, wobei die Steuereinheit (20) den Abschaltbefehl (36) über eine an die Steuereinheit (20) oder einen lokalen intelligenten Zähler (16), mit dem die Steuereinheit (20) zumindest kommunikativ verbunden ist, herangeführte Zuleitung (18) zur Zuführung elektrischer Energie an eine das Klimagerät (12) umfassende Gebäudeeinheit (10) erhält.

4. Verfahren nach Anspruch 1, 2 oder 3, wobei der Abschaltbefehl (36) vom Energiemanagementsystem (38) an die Steuereinheit (20) per Internet übermittelt wird.

5. Verfahren nach einem der vorangehenden Ansprüche, wobei als gebäudeinterne Kommunikationswege (30) zur Übermittlung eines Steuerbefehls (32) an die Bedieneinheit (28) vorhandene Stromleitungen (30) oder Funkverbindungen genutzt werden.

6. Verfahren nach einem der vorangehenden Ansprüche, wobei das Herunterschalten oder Deaktivieren des Klimageräts (12) bei einem als Kühlgerät fungierenden Klimagerät (12) durch eine Erhöhung eines Temperatursollwerts und bei einem als Heizgerät fungierenden Klimagerät (12) durch eine Verringerung eines Temperatursollwerts bewirkt wird.

7. System zum ferngesteuerten Ansteuern von dezentralen Einzelklimageräten (12) ohne Vernetzungsschnittstelle mit einer in einem Gebäude oder einer Gebäudeeinheit (10) befindlichen Steuereinheit (20) sowie in einem gleichen Gebäude oder einer gleichen Gebäudeeinheit (10) zumindest einer lokalen Bedieneinheit (28) für zumindest ein Klimagerät (12),
wobei die Steuereinheit (20) von einem entfernten Energiemanagementsystem (38) ansteuerbar ist,
wobei die oder jede lokale Bedieneinheit (28) jeweils mit zumindest einem Klimagerät (12) mittelbar oder unmittelbar kommunikativ verbindbar ist,
wobei die Steuereinheit (20) im Betrieb des Systems vom Energiemanagementsystem (38) einen Abschaltbefehl (36) erhält und auf dessen Basis über gebäudeinterne oder gebäudeeinheitsinterne Kommunikationswege (30) an zumindest eine Bedieneinheit (28) Steuerbefehle (32) weiterleitet und daraufhin die oder jede Bedieneinheit (28) zumindest ein Klimagerät (12) herunterschaltet oder deaktiviert.

8. Steuereinheit (20) zur Verwendung in einem System nach Anspruch 7 mit Mitteln zum Empfangen von Abschaltbefehlen (36) von einem entfernten Energiemanagementsystem (38) und Mitteln zum Generieren von Steuerbefehlen (32) anhand eines vom Energiemanagementsystem (38) empfangenen Abschaltbefehls (36) und zum Weiterleiten solcher Steuerbefehle (32) an zumindest eine Bedieneinheit (28).

9. Steuereinheit (20) nach Anspruch 8, mit einem Demodulator (40) als Mittel zum Empfangen von Abschaltbefehlen (36) vom entfernten Energiemanagementsystem (38) über eine Zuleitung (18) oder über das Internet.

10. Steuereinheit (20) nach Anspruch 8 oder 9, mit einem Modulator (42) als Mittel zum Generieren und Weiterleiten eines Steuerbefehls (32) für die Bedieneinheit (28).

11. Bedieneinheit (28) zur Verwendung in einem System nach Anspruch 8 mit Mitteln (40) zum Empfangen von Steuerbefehlen (32) von einer Steuereinheit (20) nach einem der Ansprüche 8 bis 10 sowie Mitteln (44) zum Generieren von drahtlos, insbesondere in Form von Infrarotsignalen, übermittelbaren Steuersignalen (34) für ein Klimagerät (12) anhand eines von der Steuereinheit (20) empfangenen Steuerbefehls (32), wobei das Steuersignal (34) bei einem als Kühlgerät fungierenden Klimagerät (12) zu einer Erhöhung eines Temperatursollwerts des Klimageräts (12) und bei einem als Heizgerät fungierenden Klimagerät (12) zu einer Verringerung des Temperatursollwerts vorgesehen ist.
